# EUROPÄISCHE PATENTANMELDUNG

(11) **EP 2 042 713 A1**
(43) Veröffentlichungstag der Anmeldung: **01.04.2009**
(21) Anmeldenummer: 08105143.5
(22) Anmeldetag: 27.08.2008
(51) Int. Cl.: F02D 41/02

(54) **Verfahren und Steuereinrichtung zur Ansteuerung eines Fahrzeugantriebsystems eines Fahrzeugs**

(30) Priorität: 27.09.2007 DE 102007046584
(71) Anmelder: Robert Bosch GmbH, 70442 Stuttgart (DE)
(72) Erfinder: Blon, Timo, 74360, Ilsfeld-Auenstein (DE)

(57) **Zusammenfassung**

Die Erfindung betrifft ein Verfahren zur Ansteuerung eines Fahrzeugantriebsystems (5) eines Fahrzeuges (1), wobei eine Geräuschemission bestimmt wird, wobei eine Vorschrift für eine zulässige Geräuschemission an einem Aufenthaltsort (102) des Fahrzeuges (1) ermittelt wird,
**dadurch gekennzeichnet, dass** das Fahrzeugantriebssytem (5) derart angesteuert wird, dass die zulässige Geräuschemission an dem Aufenthaltsort (102) des Fahrzeuges (1) nicht überschritten wird.

## Beschreibung

### Stand der Technik

Die Erfindung betrifft ein Verfahren und eine Steuereinrichtung nach Gattung der unabhängigen Ansprüche.

Aus der DE 199 45 696 A1 ist ein Schalldämpfungssystem für eine Auspuffanlage eines Kraftfahrzeugs bekannt. Dieses System weist eine Vorrichtung zur Erfassung eines Restgeräusches der Auspuffanlage auf. Die Vorrichtung zur Erfassung des Restgeräusches ist mit einem Rechner verbunden, welcher eine Schalldämpfungsfunktion ausführt. Dieses geschieht durch eine Steuerung eines elektroakustischen Wandlers, welcher ein Signal erzeugt, das eine Schalldämpfung bewirkt.

Aus der DE 44 28 493 A1 ist ebenfalls die Erzeugung eines solchen Schalldämpfungssignals bekannt. Hierbei wird im Innenraum eines Abgasrohres ein Sekundärschall erzeugt, welcher gegenphasig zu dem Schall des Abgasrohres ist, so dass der Schallpegel des Abgassystems gedämpft wird.

### Offenbarung der Erfindung

### Vorteile der Erfindung

Das erfindungsgemäße Verfahren mit den Merkmalen des unabhängigen Anspruchs hat demgegenüber den Vorteil, dass ein Fahrzeugantriebsystem eines Fahrzeugs derart angesteuert wird, dass eine zulässige Geräuschemission an einem Aufenthaltsort des Fahrzeuges nicht überschritten wird.

Die Erfindung zeigt ein Verfahren zur Ansteuerung eines Fahrzeugantriebsystems eines Fahrzeugs, wobei eine zulässige Geräuschemission bestimmt wird, wobei eine Vorschrift für eine Geräuschemission eines Aufenthaltsortes des Fahrzeuges ermittelt wird, dadurch gekennzeichnet, dass das Fahrzeugantriebsystem derart angesteuert wird, dass die zulässige Geräuschemission an dem Aufenthaltsort des Fahrzeuges nicht überschritten wird.

Führt ein Fahrer ein Fahrzeug entlang einer Straße des öffentlichen Raumes, so ist es möglich, dass an einem aktuellen Aufenthaltsort des Fahrzeuges eine Richtlinie hinsichtlich einer maximal zulässigen Geräuschemission des Fahrzeuges gilt. Eine solche Richtlinie kann beispielsweise durch den Gesetzgeber in Form einer Lärmschutzverordnung definiert werden, anhand derer Grenzwerte für einen Aufenthaltsort eines Fahrzeuges hinsichtlich einer zulässigen Geräuschemission des Fahrzeuges angegeben werden. Eine Überschreitung eines Grenzwertes für eine zulässige Geräuschemission durch die Geräuschemission des Fahrzeugs stellt eine Nichtbeachtung einer Vorschrift, beispielsweise einer gesetzlichen Richtlinie, dar und ist zu vermeiden. Gemäß des erfindungsgemäßen Verfahrens wird zunächst eine Vorschrift für eine zulässige Geräuschemission an einem Aufenthaltsort des Fahrzeuges ermittelt. Ferner wird eine Geräuschemission bestimmt, welche durch das Fahrzeugantriebsystems des Fahrzeuges emittiert wird. Das erfindungsgemäße Verfahren ist dadurch gekennzeichnet, dass das Fahrzeugantriebsystem des Fahrzeugs derart angesteuert wird, dass eine zulässige Geräuschemission an dem Aufenthaltsort des Fahrzeuges nicht überschritten wird. Dieses ist vorteilhaft, da durch die erfindungsgemäße Ansteuerung des Fahrzeugantriebsystems vorzugsweise eine Vorschrift für eine zulässige Geräuschemission an dem Aufenthaltsort des Fahrzeuges eingehalten wird.

Durch die in den abhängigen Ansprüchen aufgeführten Maßnahmen sind vorteilhafte Weiterbildungen und Verbesserungen des im unabhängigen Anspruchs angegebenen Verfahrens möglich.

Vorzugsweise wird der Aufenthaltsort des Fahrzeuges mittels einer Navigationseinrichtung ermittelt. Dieses ist vorteilhaft, da zur Ermittlung des Aufenthaltsortes des Fahrzeuges auf eine Einrichtung in Form einer Navigationseinrichtung, zurückgegriffen werden kann, welche für Kraftfahrzeuge große Verbreitung findet, so dass eine weitere, zusätzliche Einheit zur Ermittlung des Aufenthaltsortes des Fahrzeuges, beispielsweise als zusätzlicher GPS-Empfänger, nicht notwendig ist.

Vorzugsweise wird die Vorschrift für die zulässige Geräuschemission an dem Aufenthaltsort des Fahrzeuges aus einer Speichereinheit ausgelesen. Dieses ist vorteilhaft, da bestehende Vorschriften für zulässige Geräuschemissionen für unterschiedliche Aufenthaltsorte zuvor in der Speichereinheit abgelegt werden können und somit eine Vorschrift durch einfaches Auslesen aus der Speichereinheit ermittelt werden kann.

Vorzugsweise wird die Vorschrift für die zulässige Geräuschemission an dem Aufenthaltsort des Fahrzeuges mittels einer drahtlosen Datenübertragung von einer Bereitstellungseinheit übertragen. Dieses ist vorteilhaft, da nach einer Änderung einer Vorschrift für die zulässige Geräuschemission an dem Aufenthaltsort eine neue, aktuelle Vorschrift nicht zuvor in einer in einem Fahrzeug befindlichen Speichereinheit abgespeichert werden muss, sondern aktuell zu jenem Zeitpunkt mittels einer drahtlosen Datenübertragung von der Bereitstellungseinheit übertragen werden kann, zu welchem sich das Fahrzeug an dem Aufenthaltsort befindet.

Vorzugsweise wird das Fahrzeugantriebsystem derart angesteuert, dass ein Betriebszustand eines Verbrennungsmotors des Fahrzeugantriebsystems verändert wird. Dieses ist vorteilhaft, da durch eine Änderung eines Betriebszustandes eines Verbrennungsmotors auf eine Geräuschemission eines Fahrzeugantriebsystems eines Fahrzeugs eingewirkt werden kann.

Vorzugsweise wird das Fahrzeugantriebsystem derart angesteuert, dass ein Betriebszustand eines Elektromotors des Fahrzeugantriebsystems verändert wird. Dieses ist vorteilhaft, da bei Vorhandensein eines Elektromotors als Teil des Fahrzeugantriebsystems der Elektromotor durch eine Übernahme einer Leistung oder einer Teilleistung, welche zuvor von dem Verbrennungsmotor aufgebracht wurde, diese Leistung oder Teilleistung in der Regel unter Erzeugung einer Geräuschemission aufbringt, welche geringer ist, als eine Geräuschemission eines Verbrennungsmotors.

Vorzugsweise wird das Fahrzeugantriebsystem derart angesteuert, dass ein akustischer Aktor eine Geräuschemission an einem Abgasstrang des Fahrzeugs beeinflusst. Dieses ist vorteilhaft, da eine Geräuschemission eines Abgasstrangs eines Fahrzeugs einen nicht unerheblichen Anteil einer Geräuschemission eines Fahrzeugs darstellt, weshalb eine Minderung der Geräuschemission des Abgasstrangs ein wirkungsvolles Mittel zur Minderung der Geräuschemission des Fahrzeugantriebsystems darstellt.

Die erfindungsgemäße Steuereinrichtung weist ebenfalls die zuvor genannten Vorteile des Verfahrens auf.

### Kurze Beschreibung der Zeichnungen

Ausführungsbeispiele der Erfindung sind in den Zeichnungen dargestellt und in der nachfolgenden Beschreibung näher erläutert.
Figur 1a zeigt ein Fahrzeug an einem ersten Aufenthaltsort.
Figur 1b zeigt ein Fahrzeug an einem zweiten Aufenthaltsort.
Figur 2 zeigt ein Fahrzeug, welches eine Navigationseinrichtung aufweist, an einem zweiten Aufenthaltsort gemäß eines Ausführungsbeispieles.
Figur 3a und 3b zeigen ein Fahrzeug an einem zweiten Aufenthaltsort gemäß weiterer Ausführungsbeispiele.
Figur 4 zeigt ein Fahrzeug, welches ein Fahrzeugantriebsystem aufweist.
Figur 5 zeigt ein Fahrzeug gemäß eines Ausführungsbeispieles.
Figur 6 zeigt einen Abgasstrang eines Fahrzeugs gemäß eines weiteren Ausführungsbeispieles.
Figur 7 zeigt eine erfindungsgemäße Steuereinrichtung.
Figur 8 zeigt eine Steuereinrichtung gemäß eines Ausführungsbeispieles der Erfindung.

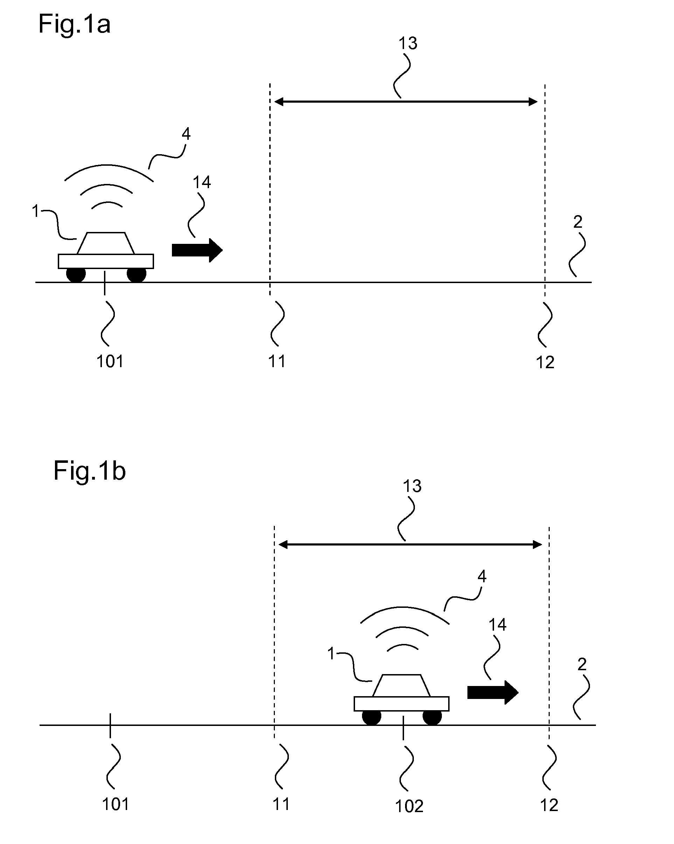

Figur 1a zeigt eine Straße 2, welche eine Zone 13 aufweist, innerhalb derer eine Vorschrift für eine zulässige Geräuschemission eines Fahrzeuges 1 gültig ist. Die Zone 13 erstreckt sich entlang der Straße 2 von einem ersten Randpunkt 11 der Zone 13 zu einem zweiten Randpunkt 12 der Zone 13. Gemäß Figur 1a befindet sich der erste Randpunkt 11 links von dem zweiten Randpunkt 12. Die Zone 13 ist in der Figur 1a durch einen Pfeil gekennzeichnet, welcher sich von dem ersten Randpunkt 11 zu dem zweiten Randpunkt 12 erstreckt. Ein Fahrzeug 1 befindet sich an einem ersten Aufenthaltsort 101, welcher sich links von dem ersten Randpunkt 11 befindet. Das Fahrzeug 1 befindet sich somit außerhalb der Zone 13. Das Fahrzeug 1 weist eine Geräuschemission 4 auf, welche gemäß Figur 1a durch Schallwellen 4 gekennzeichnet ist, welche von dem Fahrzeug 1 ausgehen. Die Fahrtrichtung 14 des Fahrzeuges 1 ist von links nach rechts gerichtet, welches durch einen Pfeil 14 in Rechtsrichtung dargestellt ist. Das Fahrzeug 1 weist somit eine Fahrtrichtung 14 auf, welche das Fahrzeug von dem ersten Aufenthaltsort 101 in Richtung des ersten Randpunktes 11 führt.

Gemäß des Ausführungsbeispieles gilt in der Zone 13 eine Vorschrift für eine zulässige Geräuschemission eines Fahrzeugs. Fährt das Fahrzeug 1 also gemäß seiner Fahrtrichtung 14 in Richtung der Zone 13, so ist es von Bedeutung, dass die Geräuschemission 4 des Fahrzeugs 1 in der Zone 13 die Vorschrift für eine zulässige Geräuschemission, welche in der Zone 13 gilt, nicht verletzt.

Die gemäß Figur 1b dargestellten Grafikelemente tragen die gleichen Bezugszeichen, wie jene, welche in Figur 1a dargestellt sind. Gemäß Figur 1b befindet sich das Fahrzeug 1 an einem zweiten Aufenthaltsort 102, welcher zwischen dem ersten Randpunkt 11 und dem zweiten Randpunkt 12 in der Zone 13 liegt. Erfindungsgemäß wird eine Geräuschemission, vorzugsweise eine Geräuschemission des Fahrzeuges 1 oder eine Geräuschemission des Fahrzeugantriebsystems des Fahrzeuges 1, bestimmt. Ferner wird die Vorschrift für eine zulässige Geräuschemission an dem zweiten Aufenthaltsort 102 innerhalb der Zone 13 ermittelt. Das Fahrzeugantriebsystem des Fahrzeugs wird erfindungsgemäß derart angesteuert, dass eine zulässige Geräuschemission an dem Aufenthaltsort 102 des Fahrzeuges 1 nicht überschritten wird.

Zur Bestimmung der Geräuschemission weist das Fahrzeug 1 mindestens einen geeigneten Sensor auf, vorzugsweise einen akustischen Sensor und/oder einen Schwingungssensor, welcher vorzugsweise an einem Verbrennungsmotor und/oder Elektromotor des Fahrzeugantriebsystems Signale misst. Bei den Signalen handelt es sich vorzugsweise um akustische Schwingungen und/oder andere Schwingungen. Die in der Zone 13 geltende Vorschrift für eine zulässige Geräuschemission an dem zweiten Aufenthaltsort 102 des Fahrzeuges kann auf unterschiedliche Weise ermittelt werden.

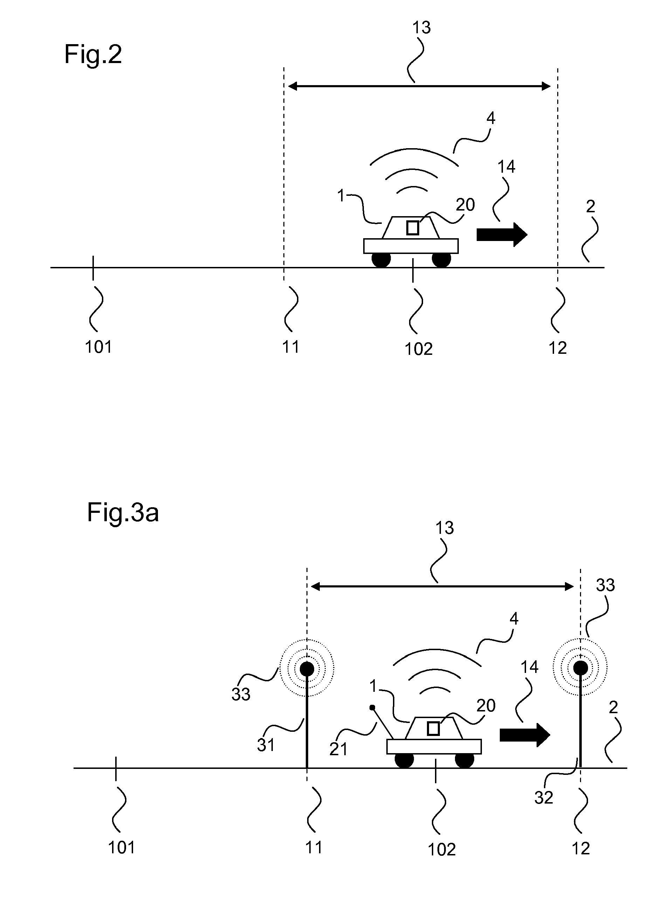

Gemäß Figur 2 sind alle Grafikelemente dargestellt, welche sich in Figur 1b finden, wobei die Bezugszeichen dieser Grafikelemente zu dem Bezugszeichen in Figur 1b identisch sind. Gemäß des in Figur 2 dargestellten Ausführungsbeispieles weist das Fahrzeug 1 eine Navigationseinrichtung 20 auf, mittels derer der Aufenthaltsort 102 des Fahrzeuges 1 ermittelt wird. Da Navigationseinrichtungen in Fahrzeugen weite Verbreitung finden, stellt die Ermittlung des Aufenthaltsortes 102 des Fahrzeuges 1 mittels der Navigationseinrichtung 20 eine Maßnahme dar, bei welcher eine Verwendung einer zusätzlichen Einrichtung zur Bestimmung des Aufenthaltsortes 102 des Fahrzeuges 1 vermieden werden kann.

Vorzugsweise wird die Vorschrift für die zulässige Geräuschemission an dem Aufenthaltsort 102 des Fahrzeuges 1 in der Zone 13 aus einer Speichereinheit ausgelesen. Hierzu weist das Fahrzeug 1 vorzugsweise eine solche Speichereinheit auf. Vorzugsweise weist die Navigationseinrichtung 20 die Speichereinheit auf. In der Speichereinheit sind für jeweilige Aufenthaltsorte jeweilige Vorschriften für zulässige Geräuschemissionen abgespeichert. Ist also vorzugsweise durch eine Navigationseinrichtung 20 der Aufenthaltsort 102 des Fahrzeuges 1 ermittelt worden, so wird vorzugsweise die in der Zone 13 geltende Vorschrift für die zulässige Geräuschemission an dem Aufenthaltsort 102 aus der Speichereinheit ausgelesen.

Figur 3a zeigt alle in Figur 1b dargestellten Grafikelemente mit entsprechenden Bezugszeichen. Figur 3a zeigt ferner an dem ersten Randpunkt 11 eine erste Bereitstellungseinheit 31 zur Bereitstellung einer Vorschrift für eine Geräuschemission in der Zone 13. Vorzugsweise ist die Bereitstellungseinheit 31 als eine Funkübertragungseinheit ausgebildet, welche mittels einer Funkübertragung 33, dargestellt durch Feldstärkelinien 33, die Vorschrift an eine Funkempfangseinheit 21 des Fahrzeuges 1 überträgt. Gemäß des Ausführungsbeispieles 3a ist es ferner möglich, dass an dem zweiten Randpunkt 12 der Zone 13 eine weitere Bereitstellungseinheit 32 in Form einer Funkübertragungseinheit vorhanden ist.

Gemäß des Ausführungsbeispieles in Figur 3a erhält das Fahrzeug 1 über seine Funkempfangseinheit 21 von mindestens einer Bereitstellungseinheit 31, 32 mittels Funkübertragung 33 die in der Zone 13 geltende Vorschrift hinsichtlich einer zulässigen Geräuschemission in der Zone 13. Ferner ist es vorzugsweise möglich, dass es sich bei den Bereitstellungseinheiten 31, 32 um Funkübertragungseinheiten handelt, welche eine Funkübertragung 33 gerichtet ausstrahlen, so dass ein Fahrzeug 1, welches sich von dem ersten Aufenthaltsort 101 ausgehend dem ersten Randpunkt 11 nähert, vor Eintritt in die Zone 13 mittels Funkübertragung 33 die Vorschrift für eine zulässige Geräuschemission erhält. Sind mindestens zwei Funkübertragungseinheiten 31, 32 vorhanden, so ist es vorzugsweise möglich, aufgrund unterschiedlicher Signale der Funkübertragungseinheiten 31, 32 es der Funkempfangseinheit 21 zu ermöglichen, zu ermitteln, in welchem Abstand sich das Fahrzeug 1 zur Zone 13 befindet. Eine solche Schätzung des Aufenthaltsortes des Fahrzeuges 1 in zweidimensionaler Richtung anhand mindestens zweier Funksignale erfolgt vorzugsweise durch die Aussendung von Korrelationssignalen.

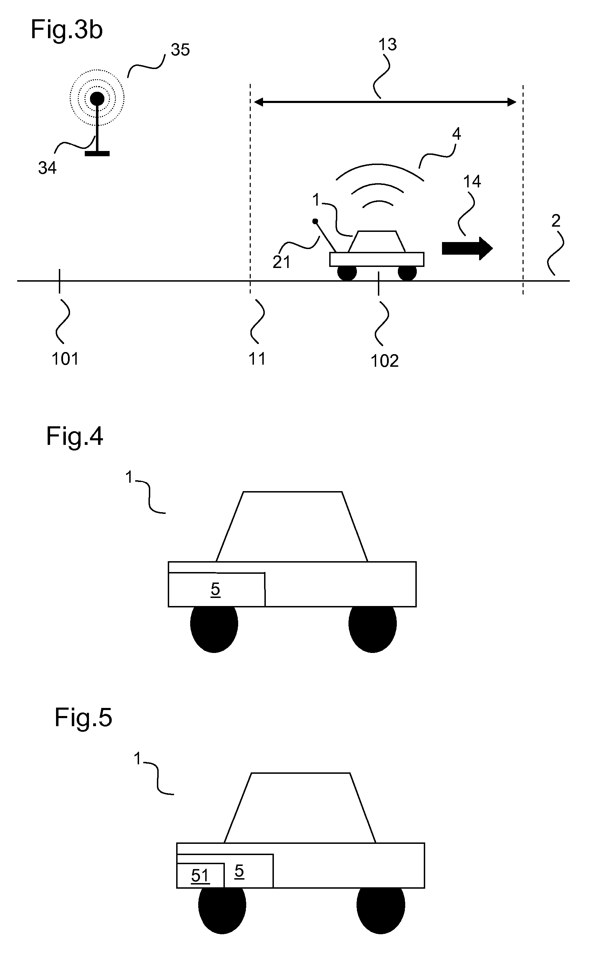

Figur 3b zeigt ein weiteres Ausführungsbeispiel der Erfindung. In Figur 3b sind alle Grafikelemente wie gemäß Figur 1b dargestellt, wobei die Grafikelemente aus Figur 1b in Figur 3b die gleichen Bezugszeichen aufweisen. Zusätzlich ist in Figur 3b eine Funkempfangseinheit 21 des Fahrzeuges 1 dargestellt. Ferner weist das Fahrzeug 1 gemäß Figur 3b eine Navigationseinrichtung 20 auf. In Figur 3b findet sich ferner eine Bereitstellungseinheit 34, welche vorzugsweise als eine Funkübertragungseinheit ausgebildet ist, die eine Übertragung einer Vorschrift für eine zulässige Geräuschemission in der Zone 13 an die Funkempfangseinheit 21 des Fahrzeuges 1 überträgt, dargestellt durch Feldstärkelinien 35, welche die Bereitstellungseinheit 34 umgeben. Ist gemäß dieses Ausführungsbeispieles durch die Navigationseinheit 20 der Aufenthaltsort 102 des Fahrzeuges 1 bestimmt worden, so folgt vorzugsweise die Übertragung der Vorschrift für eine zulässige Geräuschemission in der Zone 13 per Funkübertragung von der Bereitstellungseinheit 34 an die Funkempfangseinheit 21. Bei der Bereitstellungseinheit 34 kann es sich vorzugsweise um eine Funkeinheit eines Navigationssystems handeln. Weitere Formen von Funkeinheiten von Systemen zur Übermittlung von Informationen des Straßenverkehrs an die Funkempfangseinheit 21 sind vorzugsweise ebenfalls denkbar.

Figur 4 zeigt ein Fahrzeug 1, welches ein Fahrzeugantriebsystem 5 aufweist.

Um eine zulässige Geräuschemission an einem Aufenthaltsort eines Fahrzeuges 1 nicht zu überschreiten, wird das Fahrzeugantriebsystem 5 des Fahrzeugs 1 derart angesteuert, dass vorzugsweise ein Betriebszustand eines Verbrennungsmotors des Fahrzeugantriebsystems 5 verändert wird. Verbrennungsmotoren emittieren abhängig von ihrer Drehzahl und der von ihnen aufzubringenden Leistung Geräusche unterschiedlich stark.

Um eine Geräuschemission eines Fahrzeugantriebsystems eines Fahrzeugs zu mindern und somit eine zulässige Geräuschemission nicht zu überschreiten, ist es vorzugsweise möglich, die Drehzahl des Verbrennungsmotors zu verändern. Beispielsweise ist es möglich, von einem ersten Gang in einen zweiten, höheren Gang zu schalten, da bei gleicher Leistung in dem zweiten, höheren Gang der Verbrennungsmotor eine niedrigere Drehzahl als in dem ersten Gang aufweist, welches zu einer geringeren Geräuschemission führt. Ferner ist es vorzugsweise möglich, dass im Zuge der Ansteuerung des Fahrzeugantriebsystems der Betriebszustand des Verbrennungsmotors derart geändert wird, dass die durch den Verbrennungsmotor abzugebende Leistung limitiert wird, so dass auch die durch den Verbrennungsmotor erzeugte Geräuschemission limitiert wird, um eine zulässige Geräuschemission nicht zu überschreiten.

Gemäß eines weiteren Ausführungsbeispieles weist das Fahrzeugantriebsystem 5 mindestens einen Elektromotor auf, dessen Betriebszustand verändert wird. Vorzugsweise wird der Betriebszustand derart geändert, dass die Drehzahl des Elektromotors verändert wird, so dass auch die durch den Elektromotor erzeugte Geräuschemission verändert wird. Ferner ist es vorzugsweise möglich, im Falle eines Hybridantriebes mit sowohl eines Elektromotors als auch eines Verbrennungsmotors eine Regelung derart durchzuführen, dass die gesamte Geräuschemission, welche durch den Verbrennungsmotor und den Elektromotor erzeugt wird, eine zulässige Geräuschemission an einem Aufenthaltsort eines Fahrzeuges nicht überschreitet.

Ferner ist es beispielsweise möglich, bei Vorhandensein eines Elektromotors des Fahrzeugantriebsystems 5, den Betriebszustand des Verbrennungsmotors derart zu verändern, dass der Verbrennungsmotor keinerlei Leistung oder nur einer sehr geringe Leistung abgibt, um die Geräuschemission des Verbrennungsmotors zu minimieren. Hierbei wird vorzugsweise die Leistung des Elektromotors eine Hybridantriebes gesteigert, um mindestens eine Teilleistung des Verbrennungsmotors zu übernehmen, da Elektromotoren im Vergleich zu Verbrennungsmotoren eine geringere Geräuschemission aufweisen.

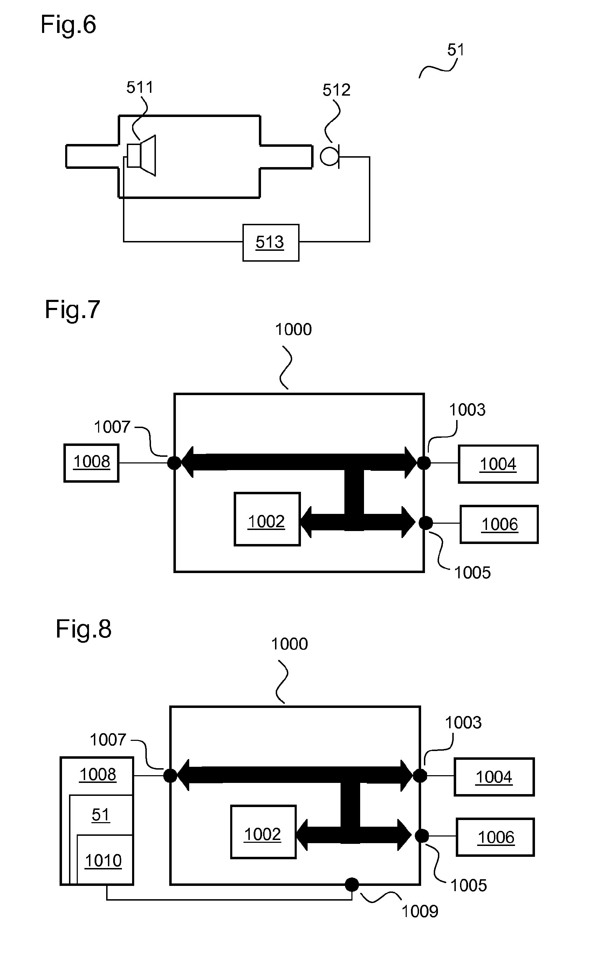

Gemäß Figur 5 weist das Fahrzeug 1 ein Fahrzeugantriebsystem 5 auf, welches wiederum einen Abgasstrang 51 beinhaltet. Der Abgasstrang 51 ist detaillierter in der Figur 6 dargestellt. Gemäß des Ausführungsbeispieles in Figur 6 weist der Abgasstrang 51 einen akustischen Sensor 512, vorzugsweise ein Mikrofon, auf.

Mittels des akustischen Sensors 512 wird das Schallgeräusch des Abgasstranges 51 bereitgestellt. Der akustische Sensor 512 ist mit einer Regelungseinheit 513 verbunden, welche das Restgeräusch des Abgasstrangs 51 analysiert, und ferner mit einem im Abgasstrang 51 befindlichen akustischen Aktor 511 verbunden ist. Die Regelungseinheit 513 steuert den akustischen Aktor 511 im Abgasstrang 51 derart an, dass das gesamte Schallgeräusch des Abgasstranges 51 gedämpft wird, welches zu einer Minderung der Geräuschemission des Fahrzeugantriebsystemes führt. Zur Dämpfung des Schallgeräusches des Abgasstranges 51 ist es vorzugsweise möglich, dass der akustische Aktor 511 zu den im Abgasstrang befindlichen Schallwellen entsprechend gegenphasige Schallwellen aussendet, um eine gegenseitige Auslöschung der Schallwellen herbeizuführen.

Figur 7 zeigt eine Steuereinrichtung 1000 mit einer ersten Schnittstelle 1003 zu mindestens einem Sensor 1004, vorzugsweise einem akustischen Sensor und/oder Schwingungssensor 1004, mit einer zweiten Schnittstelle 1005 zu einer Ermittlungseinheit 1006 zur Ermittlung einer Vorschrift für eine zulässige Geräuschemission an einem Aufenthaltsort eines Fahrzeuges, sowei einer dritten Schnittstelle 1007 zu einem Fahrzeugantriebsystem 1008. Die Steuereinrichtung 1000 weist ferner eine Recheneinheit 1002 zur Ansteuerung des Fahrzeugantriebsystems 1008 über die dritte Schnittstelle 1007 auf. Die Recheneinheit 1002 steuert das Fahrzeugantriebsystem 1008 derart an, dass eine zulässige Geräuschemission an dem Aufenthaltsort des Fahrzeugs nicht überschritten wird.

Bei dem mindestens einen Sensor 1004 kann es sich vorzugsweise um akustische Sensoren, beispielsweise Mikrofone, handeln, welche an unterschiedlichen Stellen im Fahrzeug akustische Signale des Fahrzeuges detektieren. Die durch den mindestens einen Sensor 1004 über die Schnittstelle 1003 der Steuereinrichtung 1000 bereitgestellten Signale werden durch die Recheneinheit 1002 ausgewertet. Hierbei ist es beispielsweise möglich, dass die Recheneinheit 1002 unter Zuhilfenahme von Kennlinien und/oder auch Rechenvorschriften auf der Grundlage der durch den mindestens einen Sensor 1004 bereitgestellten Signale eine Geräuschemission bestimmt.

Über die zweite Schnittstelle 1005 erhält die Recheneinheit 1002 der Steuereinheit 1000 eine durch die Ermittlungseinheit 1006 ermittelte Vorschrift für eine zulässige Geräuschemission an einem Aufenthaltsort des Fahrzeuges. Vorzugsweise handelt es sich bei der Ermittlungseinheit 1006 um eine Navigationseinrichtung, welche die Vorschrift für die Geräuschemission an dem Aufenthaltsort bereitstellt. Ferner ist es beispielsweise möglich, dass die Ermittlungseinheit 1006 eine Einheit zur Funkübertragung und/oder zum Funkempfang ist, welche über Funkübertragung die Vorschrift für die Geräuschemission an dem Aufenthaltsort empfängt.

Über die dritte Schnittstelle 1007 steuert die Steuereinrichtung 1000 das Fahrzeugantriebsystem 1008 an. Die Ansteuerung erfolgt vorzugsweise derart, dass eine zulässige Geräuschemission an dem Aufenthaltsort des Fahrzeuges nicht überschritten wird. Zur Ansteuerung des Fahrzeugantriebsystems 1008 verwendet die Steuereinrichtung 1000 vorzugsweise die Recheneinheit 1002. Die Recheneinheit 1002 hat vorzugsweise Kenntnis, in Form von Daten, Kennlinien oder auch Softwaremodulen, um eine Ansteuerung des Fahrzeugantriebsystems 1008 derart vorzunehmen, dass eine Geräuschemission des Fahrzeugantriebsystems 1008 so weit gemindert wird, dass eine zulässige Geräuschemission nicht überschritten wird. Hierzu führt die Recheneinheit 1002 vorzugsweise einen Regelungsalgorithmus durch, welcher als Eingangsgrößen die Signale des mindestens einen Sensors 1004 sowie die Vorschrift für eine zulässige Geräuschemission an dem Aufenthaltsort des Fahrzeuges beinhaltet. Als Ausgangsgröße besitzt der Regelungsalgorithmus vorzugsweise Ansteuerungssignale, um das Fahrzeugantriebsystem 1008 entsprechend anzusteuern.

Zur Ansteuerung des Fahrzeugantriebsystems 1008 sind vorzugsweise Ansteuerungen eines Verbrennungsmotors, eines Elektromotors und/oder eines akustischen Aktors an dem Abgasstrang 51 möglich.

Gemäß des Ausführungsbeispieles in Figur 8 weist die Steuereinrichtung zur Ansteuerung eines akustischen Aktors 1010 eine vierte Schnittstelle 1009 auf, über welche der akustische Aktor 1010 als Teil des Fahrzeugantriebsystemes 1008 angesteuert wird. Um mittels des akustischen Aktors 1010 eine Geräuschemission an dem Abgasstrang 51 des Fahrzeuges 1 derart zu beeinflussen, dass eine Geräuschemission des Abgasstranges 51 gemindert wird, misst die Steuereinrichtung 1000 über die erste Schnittstelle 1003 mittels des mindestens eines Sensors 1004, welcher sich am Abgasstrang 51 befindet, die durch den Abgasstrang 51 erzeugten Schwingungen, vorzugsweise die durch den Abgasstrang erzeugten Schallwellen.

Gemäß eines weiteren Ausführungsbeispieles ist es möglich, mittels mindestens eines Sensors 1004 Schwingungen an einer Fahrzeugkomponenten wie beispielsweise einem Luftansaugsystem oder einer Motoraufhängung zu messen, um nach einer Analyse dieser Schwingungen durch die Steuereinrichtung 1000 einen akustischen Aktor 1010 in der Nähe der Fahrzeugkomponente derart anzusteuern, dass die durch die Fahrzeugkomponente erzeugte Geräuschemission gemindert wird.

## Patentansprüche

1. Verfahren zur Ansteuerung eines Fahrzeugantriebsystems (5) eines Fahrzeuges (1), wobei eine Geräuschemission bestimmt wird, wobei eine Vorschrift für eine zulässige Geräuschemission an einem Aufenthaltsort (102) des Fahrzeuges (1) ermittelt wird,
**dadurch gekennzeichnet, dass** das Fahrzeugantriebssytem (5) derart angesteuert wird, dass die zulässige Geräuschemission an dem Aufenthaltsort (102) des Fahrzeuges (1) nicht überschritten wird.

2. Verfahren nach Anspruch 1,
**dadurch gekennzeichnet, dass** der Aufenthaltsort (102) des Fahrzeuges (1) mittels einer Navigationseinrichtung (20) ermittelt wird.

3. Verfahren nach Anspruch 2,
**dadurch gekennzeichnet, dass** die Vorschrift für die zulässige Geräuschemission an dem Aufenthaltsort (102) des Fahrzeuges (1) aus einer Speichereinheit ausgelesen wird.

4. Verfahren nach Anspruch 1 oder 2,
**dadurch gekennzeichnet, dass** die Vorschrift für die zulässige Geräuschemission an dem Aufenthaltsort (102) des Fahrzeuges (1) mittels einer drahtlosen Datenübertragung von einer Bereitstellungseinheit (31, 32, 34) übertragen wird.

5. Verfahren nach Anspruch 1 bis 4,
**dadurch gekennzeichnet, dass** das Fahrzeugantriebsystem (5) derart angesteuert wird, dass ein Betriebszustand eines Verbrennungsmotors des Fahrzeugantriebsystems (5) verändert wird.

6. Verfahren nach Anspruch 1 bis 5,
**dadurch gekennzeichnet, dass** das Fahrzeugantriebsystem (5) derart angesteuert wird, dass ein Betriebszustand eines Elektromotors des Fahrzeugantriebsystems (5) verändert wird.

7. Verfahren nach Anspruch 1 bis 6,
**dadurch gekennzeichnet, dass** das Fahrzeugantriebsystem (5) derart angesteuert wird, dass ein akustischer Aktor (1010) eine Geräuschemission an einem Abgasstrang (51) des Fahrzeugs (1) beeinflusst.

8. Steuereinrichtung (1000) mit einer ersten Schnittstelle (1003) zu mindestens einem Sensor (1004), mit einer zweiten Schnittstelle (1005) zu einer Ermittlungseinheit (1006) zur Ermittlung einer Vorschrift für eine zulässige Geräuschemission an einem Aufenthaltsort (102) eines Fahrzeuges (1), mit einer dritten Schnittstelle (1007) zu einem Fahrzeugantriebsystem (1008) des Fahrzeuges,
mit einer Recheneinheit (1002) zur Ansteuerung des Fahrzeugantriebsystems (1008),
**dadurch gekennzeichnet, dass** das Fahrzeugantriebssytem (1008) durch die Recheneinheit (1002) derart angesteuert wird, dass die zulässige
Geräuschemission an dem Aufenthaltsort (102) des Fahrzeuges (1) nicht überschritten wird.

9. Steuereinrichtung (1000) nach Anspruch 8,
**dadurch gekennzeichnet, dass** die Steuereinrichtung (1000) eine vierte Schnittstelle (1009) zu einem akustischen Aktor (1010) zur Beeinflussung einer Geräuschemission an einem Abgasstrang (51) des Fahrzeuges (1) aufweist.
